# EUROPÄISCHE PATENTSCHRIFT

(11) **EP 2 418 652 B1**
(45) Veröffentlichungstag und Bekanntmachung des Hinweises auf die Patenterteilung: **30.10.2013**
(21) Anmeldenummer: 11173460.4
(22) Anmeldetag: 11.07.2011
(51) Int. Cl.: G21C 19/32, G21F 5/008, G21F 9/28

(54) **Verfahren und Anordnung zum gasdichten Umschließen zumindest eines Brennstabs**
Method and assembly for surrounding a fuel rod to prevent the leakage of gas
Procédé et agencement destiné à entourer au moins une barre de combustible de manière étanche au gaz

(30) Priorität: 13.07.2010 DE 102010036373
(43) Veröffentlichungstag der Anmeldung: 15.02.2012
(73) Patentinhaber: Nuclear Cargo + Service GmbH, 63457 Hanau (DE)
(72) Erfinder: Hilbert, Franz, 65199 Wiesbaden (DE); Stanke, Simon, 63864 Glattbach (DE)
(74) Vertreter: Stoffregen, Hans-Herbert

(56) Entgegenhaltungen:
- WO-A1-2010/084122

## Beschreibung

Die Erfindung bezieht sich auf ein Verfahren zum gasdichten Umschließen zumindest eines sich in einer Flüssigkeit befindlichen Brennstabs. Auch nimmt die Erfindung Bezug auf eine Anordnung zum gasdichten Umschließen zumindest eines sich in einer Flüssigkeit befindlichen Brennstabs.

Brennstäbe bestehen aus nuklearem Brennstoff wie beispielsweise angereichertem Uran oder Mischoxid bestehend aus Uran und Plutonium, der in dichtgeschweißten Hüllrohren bestehend z. B. aus einer Zirkonlegierung eingeschlossen ist. Bei Bestrahlung der Brennstäbe im Reaktor entstehen radioaktive Spaltprodukte sowie Aktiniden, die in den dichtgeschweißten Hüllrohren eingeschlossen bleiben.

Durch die Bestrahlung im Reaktor werden die Eigenschaften der Hüllrohre negativ beeinflusst. Bei geringen und mittleren Abbränden sind die Materialeigenschaften der Hüllrohre noch ausreichend, um das radioaktive Inventar bei den für Transport- und Lagerbedingungen anzunehmenden Beanspruchungen sicher einzuschließen.

Über die Materialeigenschaften von Hüllrohren von Brennstäben mit hohen Abbränden von mehr als 60 - 70 GWd/MgSM liegen keine ausreichenden Untersuchungen zum Nachweis des sicheren Einschlusses des radioaktiven Inventars bei den für Transport- und Lagerbedingungen anzunehmenden Beanspruchungen vor. Aufgrund der im Nuklearbereich angewendeten konservativen Sicherheitsanalysen werden deshalb hochabgebrannte Brennstäbe wie beschädigte bestrahlte Brennstäbe behandelt.

Bei beschädigten bestrahlten und hochabgebrannten Brennstäben ist die Barriere "Hüllrohr" definitionsgemäß nicht vorhanden. Spaltprodukte, insbesondere gasförmige Spaltprodukte, und Aktiniden können aus dem Brennstab austreten. Beim Transport und der Lagerung der Brennstäbe in Transport- bzw. Lagerbehältern gelangen somit die radioaktiven Inventare der Brennstäbe in die Behälteratmosphäre und stehen an den Dichtungen dieser Behälter an. Bei Transportbehältern, die in der Regel mit Dichtungen aus Elastomeren ausgerüstet sind, ergeben sich hierdurch stark erhöhte Freisetzungsraten bzw. bei Einhaltung der in den relevanten Vorschriften festgelegten zulässigen Freisetzungsraten sehr geringe zulässige Brennstoffinventare im Behälter. Diese zulässigen Brennstoffinventare können in Abhängigkeit von der Abklingzeit so gering sein, dass ein kompletter Brennstab nicht mehr transportiert werden kann. Bei Lagerbehältern können die an den Dichtungen anstehenden radioaktiven Nuklide zu negativen Langzeitbeeinflussungen der Dichtungen führen. Derzeit sind deshalb als Beladung von Behältern, die zur Lagerung von Brennelementen dienen, nur intakte Brennstäbe mit limitierten Abbränden zugelassen.

Nach der Bestrahlung im Reaktor werden die Brennstäbe zur Kühlung und Abschirmung der radioaktiven Strahlung unter Wasser gelagert. In der Regel sind in Kernkraftwerken keine Einrichtungen vorhanden, die eine trockene Bearbeitung von bestrahlten Brennstäben ermöglichen. Das Einbringen von bestrahlten Brennstäben in Transport-und/oder Lagerbüchsen muss demnach zwingend unter Wasser erfolgen.

Es ist bekannt, beschädigte bestrahlte Brennstäbe in Heißen Zellen in trockenem Zustand in verschweißte Transport- und/oder Lagerbüchsen einzubringen.

Auch soll vorgeschlagen sein, bestrahlte Brennstäbe unter Wasser in verschraubte, metallisch dichtende Transport- und/oder Lagerbüchsen einzubringen. Dabei wird ein Großteil des Wassers durch von oben zugeführte Druckluft aus der Büchse verdrängt, um die Büchse anschließend durch beidseitig vorhandene verschraubte Stopfen zu verschließen. Bedingt durch das Verfahren verbleibt eine undefinierte Menge Restwasser in der Büchse. Dies kann durch Verdampfen zu Druckaufbau in der Büchse führen, da die Brennstäbe beim Transport bzw. der Lagerung eine Temperatur bis beispielsweise 370 °C erreichen können. Des Weiteren kann undefinierte Korrosion an den Hüllrohren oder dem Brennstoff auftreten.

Der DE-A-28 54 358 ist ein Transportbehälter für radioaktive Materialien zu entnehmen. Um in dem Behälter radioaktive Materialien in trockener Gasatmosphäre zu lagern, wird der Behälter mit Gas durchspült und sodann verschlossen.

Nach der DE-U-89 06 938 werden Brennelemente in einem Brennelementbecken in eine Tauchglocke eingebracht, die nach dem Verschließen evakuiert wird.

Aus der US-A-5,633,904 ist ein Transfersystem für Brennstoffstäbe bekannt, das einen oberhalb eines Beckens angeordneten Transportbehälter umfasst, in das über ein Transfersystem die Brennstäbe aus dem Becken eingebracht werden.

Aus der DE-A-196 40 393 ist eine Kapsel für einen radioaktiven Körper bekannt. Die Kapsel besteht aus einer langgestreckten Hülse sowie diese verschließenden Verschlussstopfen, über die aus dem Inneren der Hülse Flüssigkeit abgesaugt werden kann.

DE3226986 zeigt ein Verfahren und eine Vorrichtung zum gasdichten Umschließen eines sich in einer Flüssigkeit befindlichen Brennstabes, wobei der Brennstab in einen aus einer äußeren Zylinderhülse und einem Innenrohr bestehenden Behälter eingebracht wird.

Der vorliegenden Erfindung liegt die Aufgabe zugrunde, ein Verfahren und eine Anordnung zum gasdichten Umschließen zumindest eines sich in einer Flüssigkeit befindlichen Brennstabs derart weiterzubilden, dass hoch abgebrannte und/oder beschädigte bestrahlte Brennstäbe in einer definierten Atmosphäre und nachgewiesener Dichtheit lager- bzw. transportfähig sind.

Verfahrensmäßig wird die Aufgabe im Wesentlichen gelöst durch ein
(a) Positionieren eines stirnseitige Öffnungen aufweisenden und über erste Verschlusselemente verschließbaren Innenrohrs in einer vertikal ausgerichteten Aufnahme,
(b) Einbringen des zumindest einen Brennstabs in das Innenrohr,
(c) Ausrichten des oberen ersten Verschlusselements auf die obere stirnseitige Öffnung des Innenrohrs,
(d) Verschließen der Aufnahme und Entfernen der in der Aufnahme und dem Innenrohr vorhandenen Flüssigkeit,
(e) Kraßbeaufschlagung des unteren ersten Verschlusselements in axialer Richtung des Innenrohrs, wobei das Innenrohr mitgenommen wird und zu dem oberen ersten Verschlusselement bei gleichzeitigem Einbringen des oberen ersten Verschlusselements in das Innenrohr verstellt wird, und
(f) nach ordnungsgemäßem Positionieren der ersten Verschlusselemente in dem Innenrohr stoffschlüssiges Verbinden der ersten Verschlusselemente mit dem Innenrohr.

Des Weiteren sieht die Erfindung bevorzugterweise vor, dass nach dem stoffschlüssigen Verbinden der ersten Verschlusselemente mit dem Innenrohr die
(g) Aufnahme geflutet wird und
(h) das den zumindest einen Brennstab umschließende Innenrohr aus der Aufnahme entnommen wird.

Dabei sollten zumindest die Verfahrensschritte (b) - (h) in einer oder der Flüssigkeit durchgerührt werden, in der sich der zumindest eine Brennstab befindet.

Erfindungsgemäß werden hochabgebrannte und/oder beschädigte Brennstäbe in der Flüssigkeit, die - wie eine Wasserüberdeckung - zur Abschirmung der Strahlung ausreicht, in Innenrohre, vorzugsweise in Edelstahlrohre eingebracht, die vor dem Verschließen getrocknet und - insbesondere durch Löten - stoffschlüssig mit als Stopfen oder Kappen zu bezeichnenden ersten Verschlusselementen verschlossen werden. Dabei besteht die Möglichkeit, dass nach dem Verschließen eine Dichtheitsprüfung erfolgt.

Insbesondere ist vorgesehen, dass nach der Trocknung, insbesondere Vakuumtrocknung, der Innenraum der Aufnahme mit Edelgas wie Helium geflutet wird, unter Edelgasatmosphäre das stoffschlüssige Verbinden wie Löten durchgeführt wird und nach der Ausbildung der stoffschlüssigen Verbindung der Innenraum insbesondere mit trockenem Stickstoff gespült wird, so dass anschließend eine Dichtheitsprüfung des Außenrohrs wie Heliumdichtheitsprüfung durchgeführt werden kann.

Es werden folglich hoch abgebrannte und/oder beschädigte bestrahlte Brennelemente durch gasdichtes Einschließen in ein metallisches Rohr, also das Innenrohr, das auch als Büchse zu bezeichnen ist, in einen transport- und/oder lagerfähigen Zustand gebracht.

Das Außenrohr erstreckt sich endseitig gasdicht in Gehäuseteilen, die Lötstationen enthalten, um das Innenrohr mit den ersten Verschlusselementen stoffschlüssig zu verbinden.

In hervorzuhebender Ausgestaltung der Erfindung ist vorgesehen, dass das untere erste Verschlusselement während des Entfernens der Flüssigkeit in einer ersten Position in dem Innenrohr angeordnet wird, in der durch das untere erste Verschlusselement sowie zumindest einer das Innenrohr durchsetzende Öffnung Flüssigkeit herausgedrückt wird.

Durch diese Maßnahme ist auf einfache Weise der Innenraum des Innenrohrs entleerbar. Die Flüssigkeit aus dem Innenrohr sowie dem Außenrohr wird insbesondere über in dem unteren Gehäuseteil vorhandene Öffnungen mittels z.B. trockenen Stickstoffs herausgedrückt, um anschließend eine Vakuumtrocknung durchzuführen. Sodann erfolgt das stoffschlüssige Verbinden der ersten Verschlusselemente mit dem Innenrohr. Dabei wird zunächst das Innenrohr mittels des unteren Verschlusselements angehoben. Hierzu ist in dem Innenrohr ein Absatz oder eine Stufe vorgesehen, in der das untere erste Verschlusselement anstößt, um sodann bei weiterer Kraftbeaufschlagung zusammen mit dem Innenrohr in Richtung des oberen ersten Verschlusselements verstellt zu werden, damit dieses in das Innenrohr eindringt. Hierzu wird das obere erste Verschlusselement von einer im oberen Gehäuseteil vorhandenen Halterung fixiert, die eine trichterförmige Durchgangsöffnung aufweist mit einem Querschnitt, der größer als der des Innenrohrs ist.

Der obere erste Verschlussstopfen weist des Weiteren einen oberen zylindrischen flanschartigen Abschnitt auf, dessen Durchmesser größer als der lichte Durchmesser der trichterförmigen Durchgangsöffnung ist. Somit kann das obere Verschlusselement nicht durch die Halterung hindurchrutschen.

Damit das obere erste Verschlusselement der Bewegung des Innenrohrs nicht ausweichen kann, wird das obere erste Verschlusselement in der Halterung fixiert. Dies kann über einen von einem das obere Gehäuseteil verschließenden Deckel als zweites Verschlusselement bzw. ein von diesem ausgehendes Fixierelement erfolgen, das verschwenkbar mit dem Deckel verbunden ist.

Nachdem die ersten Verschlusselemente positionsgenau in dem Innenrohr angeordnet worden sind, erfolgt ein stoffschlüssiges Verbinden, und zwar insbesondere durch Induktionsheizungen. Hierzu sind in den Gehäuseteilen entsprechende Induktionsspulen vorhanden, die das Innenrohr im Bereich der ersten Verschlusselemente umgeben. Die Induktionsspulen können dabei einen aus Keramik bestehenden Hohlzylinder umgeben, um die Induktionsspulen zu schützen.

Um sicherzugehen, dass im erforderlichen Umfang ein stoffschlüssiges Verbinden erfolgt ist, wird die Temperatur beim Löten überwacht. Hierzu weist das Gehäuseteil ein Sichtfenster auf, über das die Wärmestrahlung beim Löten erfasst wird. Die Wärmestrahlung wird sodann über einen Lichtleiter zu einem außerhalb der Flüssigkeit vorhandenen Messgerät wie Pyrometer geleitet.

Damit das Innenrohr ordnungsgemäß in dem Außenrohr positioniert wird, gehen von dessen Innenwandungen Einbauten aus, die eine Führung des Innenrohrs sicherstellen. Hierbei kann es sich um trichterförmige oder keilförmige Elemente handeln, die mit der Innenwandung des Außenrohrs verschweißt sind und insbesondere auch aus Edelstahl bestehen. Die Führungselemente weisen dabei Durchtrittsöffnungen bzw. in Längsrichtung verlaufende Riefen auf, damit die Flüssigkeit aus dem Innenraum im erforderlichen Umfang abfließen kann.

Eine erfindungsgemäße Anordnung zum gasdichten Umschließen zumindest eines sich in einer Flüssigkeit befindlichen Brennstabs umfasst:
(a) ein stirnseitige Öffnungen aufweisendes Innenrohr, in das der zumindest eine Brennstab einbringbar ist, sowie Verschlusselemente, mittels der die Öffnungen verschlossen werden,
(b) eine Aufnahme für das Innenrohr, die einen Mittelabschnitt in Form eines Außenrohrs sowie das Außenrohr endseitig begrenzende Gehäuseteile aufweist, in denen Einrichtungen zum stoffschlüssigen Verbinden des Innenrohrs mit den ersten Verschlusselementen vorhanden sind, wobei in dem Außenrohr Führungen für das Innenrohr angeordnet sind, in einem ersten Gehäuseteil eine als Abstützung für das Innenrohr dienende und von einem Betätigungselement durchsetzbare erste Aufnahme und in dem weiteren zweiten Gehäuseteil eine zweite Aufnahme vorhanden sind und die zweite Aufnahme, eine trichterförmige Durchgangsöffnung aufweist, deren Längsachse bei in der zweiten Aufnahme sich befindendem Rohr auf dessen Längsachse ausgerichtet ist, wobei in der zweiten Aufnahme eines der ersten Verschlusselemente ober ein von diesem ausgehendes Fixierelement fixiert wird, wobei die trichterförmige Durchgangsöffnung von dem Innenrohr durchsetzt werden kann.

Insbesondere ist vorgesehen, dass die erste Aufnahme von einem Betätigungselement wie Kolben durchsetzbar ist, über das das in dem Innenrohr bis zu einem in diesem vorhandenen Anschlag wie Stufe axial verschiebbare erste Verschlusselement derart kraftbeaufschlagbar ist, dass nach Anliegen des ersten Verschlusselements an dem Anschlag das Verschlusselement zusammen mit dem Innenrohr zum Einbringen des von der zweiten Aufnahme ausgehenden ersten Verschlusselements in das Innenrohr verstellbar ist. Hierdurch ist mit konstruktiv einfachen Maßnahmen die Möglichkeit gegeben, das untere erste Verschlusselement in das Innenrohr hineinzubewegen, damit sodann, nachdem das erste Verschlusselement an dem in dem Innenrohr vorhandenen Anschlag anliegt, das Innenrohr in Richtung des oberen ersten Verschlusselements verstellt wird, damit dieses in das Innenrohr in einem Umfang eindringt, dass anschließend ein sicheres stoffschlüssiges Verbinden zwischen oberem ersten Verschlusselement und dem Innenrohr erfolgen kann.

Das untere erste Verschlusselement befindet sich also beim Einbringen des Brennelements in dem Innenrohr. Um ungeachtet dessen Flüssigkeit abfließen zu lassen, ist vorgesehen, dass das axial bis zum Anschlag verstellbare erste Verschlusselement zumindest eine von innerer Stirnfläche ausgehende und zur Umfangsfläche des ersten Verschlusselements sich erstreckende Durchgangsöffnung aufweist, die bei zu dem Anschlag beabstandeter ersten Position des ersten Verschlusselements mit einer Umfangswandung des Innenrohrs durchsetzenden Öffnung fluchtet. Die Durchgangsöffnung kann als Sieb ausgebildet sein, um gegebenenfalls partikelförmige Verunreinigungen zurückhalten zu können.

Das Außenrohr wird endseitig von den Gehäuseteilen aufgenommen und ist gegenüber diesen über Vakuumflansche abgedichtet. In den Gehäuseteilen befinden sich sodann sogenannte Lötstationen in Form von Induktionsspulen, um die ersten Verschlusselemente mit dem Innenrohr stoffschlüssig zu verbinden.

Um temperaturbedingte Längenänderungen des Außenrohrs zu ermöglichen, sieht eine gleichfalls hervorzuhebende Weiterbildung der Erfindung vor, dass das Außenrohr einen längenveränderbaren Abschnitt, wie z.B. einen Faltenbalg, aufweist. Somit kann sich bei temperaturbedingten Längenänderungen des Innenrohrs das Außenrohr entsprechend mitbewegen.

Die Anordnung selbst wird von einer Tragekonstruktion aufgenommen, die insbesondere aus Profilelementen wie U-Profilen besteht. Die Konstruktion weist mehrere zusammensetzbare Elemente auf, die zusammengesetzt werden, um die Tragekonstruktion und somit die Anordnung in ein Flüssigkeitsbecken im erforderlichen Umfang einzubringen, damit die erforderliche Wasserüberdeckung eingehalten wird. Nach dem Entfernen des Brennstabs aus dem Außenrohr kann sodann die Anordnung aus dem Becken entfernt und die Tragekonstruktion zerlegt werden, um einen problemlosen Transport zu ermöglichen.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:

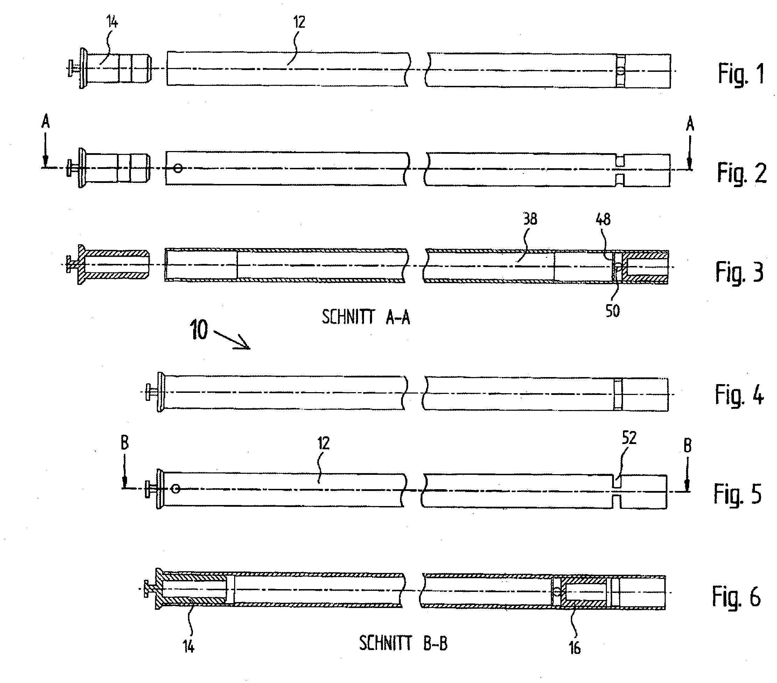

- Fig. 1: eine Seitenansicht einer Lagerbüchse,
- Fig. 2: die Lagerbüchse gem. Fig. 1 um 90° gedreht,
- Fig. 3: einen Schnitt entlang der Linie A-A in Fig. 2,
- Fig. 4: die Lagerbüchse gem. Fig. 1 mit in dieser ordnungsgemäß positionierten Stopfen,
- Fig. 5: die Lagerbüchse gem. Fig. 4 um 90 ° gedreht,
- Fig. 6: einen Schnitt entlang der Linie B-B in Fig. 5,
- Fig. 7: eine Anordnung zur Aufnahme der Lagerbüchse,
- Fig. 8: eine Draufsicht auf die Anordnung gem. Fig. 7,
- Fig. 9: einen Schnitt entlang der Linie A-A in Fig. 8,
- Fig. 10: ein Detail B der Fig. 9,
- Fig. 11: ein Detail C gemäß Fig. 9,
- Fig. 12: ein Detail D gem. Fig. 10,
- Fig. 13: ein Detail E gem. Fig. 11,
- Fig. 14: die Anordnung gemäß Fig. 7 mit verschlossenem oberem Gehäuseteil,
- Fig. 15: eine Draufsicht auf die Anordnung gem. Fig. 14,
- Fig. 16: einen Schnitt entlang der Linie A-A in Fig. 15,
- Fig. 17: ein Detail B in Fig. 16,
- Fig. 18: ein Detail C in Fig. 16,
- Fig. 19: ein Detail D in Fig. 17,
- Fig. 20: ein Detail E in Fig. 17,
- Fig. 21: ein Detail F in Fig. 18 und

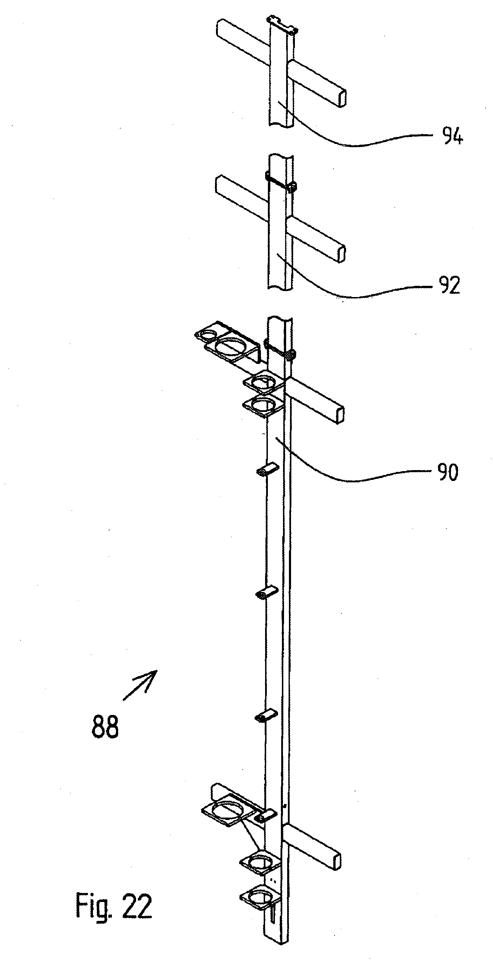

- Fig. 22: eine Tragekonstruktion .

Um beschädigte, bestrahlte und hochabgebrannte Brennstäbe lagern bzw. transportieren zu können ist sicherzustellen, dass ein Austritt von Brennstoffinventaren, also gasförmigen Spaltprodukten ausgeschlossen wird. Anderenfalls würden die an den Dichtungen der die Brennstäbe aufnehmenden Transport- und Lagerbehälter anstehenden radioaktiven Nukliden zu negativen Langzeitbeeinflussungen führen.

Bei hochabgebrannten oder beschädigten Brennstäben ist die Barriere "Hüllrohr" nicht mehr intakt, so dass diese als nicht vorhanden bewertet wird. Um dennoch entsprechende Brennstäbe lagern und transportieren zu können, werden diese nach der erfindungsgemäßen Lehre in eine Transport- oder Lagerbüchse 10 eingebracht, die ein als Innenrohr 10 bezeichnetes Hüllrohr 12 und diese verschließende Stopfen 14, 16 besteht, die auch als erste Verschlusselemente bezeichnet werden.

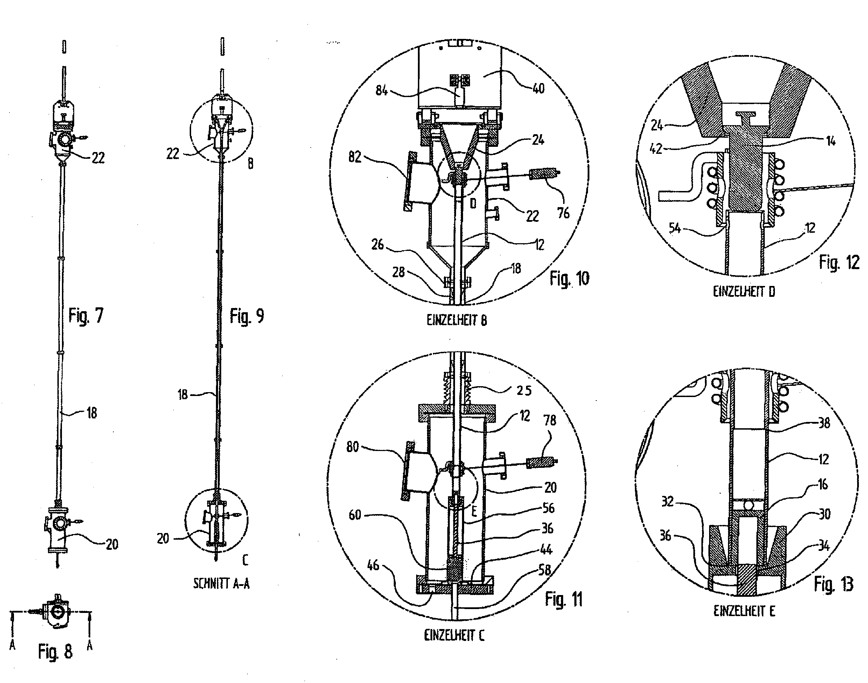

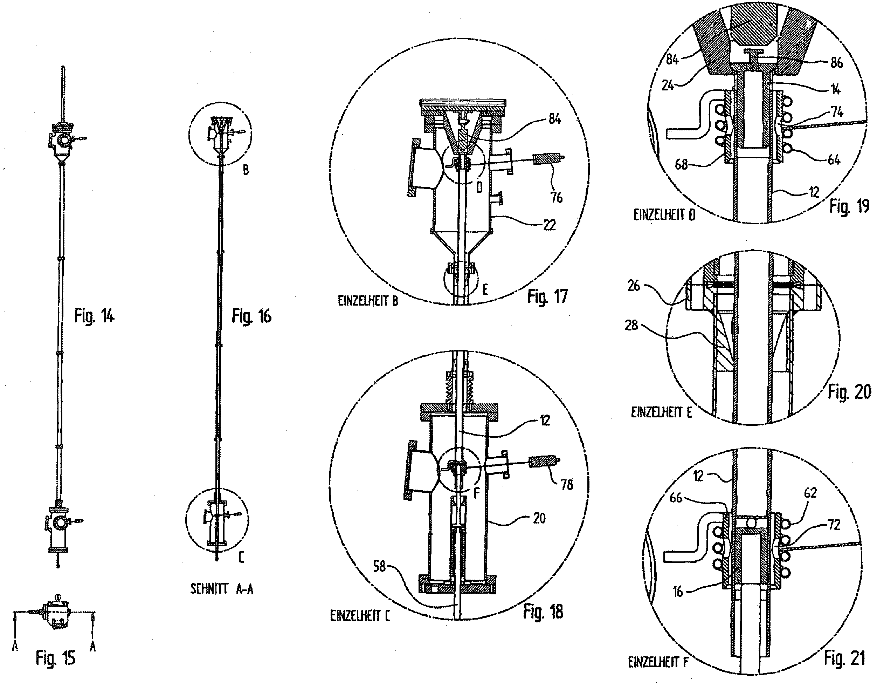

Zum Befüllen des Hüllrohrs 12 mit einem Brennstab ist das Hüllrohr 12 vertikal ausgerichtet, wobei der in der Zeichnung rechts dargestellte Stopfen 16 bodenseitig verläuft. Das Hüllrohr 12 mit dem unteren Stopfen 16 wird in ein Außenrohr 18 eingebracht, das aus mehreren Abschnitten besteht, die über Flansche verbunden sind, wie sich dies rein prinzipiell aus den Figuren 7 und 8 bzw. 14 und 16 ergibt. Ein Flansch ist beispielhaft mit dem Bezugszeichen 26 (Fig. 20) gekennzeichnet.

Das Außenrohr 18 ragt endseitig in ein unteres Gehäuseteil 20 und ein oberes Gehäuseteil 22, die eine Zylindergeometrie aufweisen. Das Außenrohr 18 ist mit den Gehäuseteilen 20, 22 über Vakuumflansche gasdicht verbunden. Ferner weist das Außenrohr 18 in seinem unteren Endbereich einen als Faltenbalg 25 ausgebildeten Abschnitt auf, um Längenänderungen zu kompensieren, die dadurch entstehen können, dass sich aufgrund der Temperatur des Brennstabs das als Innenrohr bezeichnete Hüllrohr 12 ausdehnt.

Das Außenrohr 18 und die Gehäuseteile 20, 22 bilden folglich eine Aufnahme für das Innen- bzw. Hüllrohr 12.

Das Hüllrohr 12 mit in diesem vorhandenen unteren Verschlussstopfen 16 wird bei vertikal ausgerichtetem Außenrohr 18 über eine im oberen Gehäuseteil 22 vorhandene trichterförmig ausgebildete Halterung 24 (zweite Aufnahme) eingeführt, die mittig von der Längsachse des Außenrohrs 18 durchsetzt wird. Die trichterförmige Halterung 24 weist einen lichten Durchmesser auf, der es ermöglicht, dass das Hüllrohr 12 bzw. das Innenrohr eingeführt werden kann.

Um das Hüllrohr 12 zu führen, gehen von der Innenwand des Außenrohrs 18 vorzugsweise benachbart zu den Flanschen, über die die Abschnitte des Außenrohrs 18 miteinander verbunden sind, Führungen 28 aus. Die Führungen 28 weisen jeweils eine trichterförmige Geometrie auf und bestehen insbesondere aus Edelstahl und sind mit dem Außenrohr 18 verschweißt. Durch die Geometrie der Führung 28 ist sichergestellt, dass das Innenrohr bzw. Hüllrohr 12 zentrisch durch das Außenrohr 18 bis zu einer im unteren Gehäuseteil 20 vorhandenen Abstützung 30 (erste Aufnahme) geführt werden kann. Die Abstützung 30 weist eine im Schnitt konische Aussparung mit einem Sitz 32 auf, auf dem das Hüllrohr 12 mit dem unteren Stopfen 16 abstützbar ist.

Man erkennt des Weiteren aus der Detaildarstellung der Fig. 20, dass die trichterförmigen Führungen 28 in Längsrichtung verlaufende Vertiefungen bzw. Riefen aufweisen, damit bei Abziehen der Flüssigkeit diese ungehindert hindurchströmen kann.

Die Abstützung 30 weist eine zentrale Bohrung 34 auf, die in nachstehend beschriebener Art von einem Kolben 36 durchsetzbar ist, über den der untere Stopfen 16 axial innerhalb des Hüllrohrs 12 bis zu einem Anschlag 38 verschiebbar ist, um anschließend den Stopfen 16 zusammen mit dem Hüllrohr 12 axial innerhalb des Außenrohrs 18 verstellen zu können.

Nachdem das Hüllrohr 12 in dem Außenrohr 18 positioniert, also auf dem Sitz 32 der ersten Abstützung 30 aufsteht, wird in das Hüllrohr 12 zumindest ein Brennstab eingebracht, und zwar über das obere Gehäuseteil 22, das über einen Deckel 40 verschließbar ist, der um eine horizontal verlaufende Achse verschwenkbar ist.

Sobald der nicht dargestellte Brennstab in dem Hüllrohr 12 eingebracht ist, wird in die trichterförmige Halterung der obere Verschlussstopfen 14 eingesetzt, der einen oberen umlaufenden flanschartigen Rand 42 aufweist, dessen Durchmesser größer als der lichte Durchmesser der trichterförmigen Halterung 24 ist, so dass der Stopfen 14 von der Halterung 24 fixiert wird.

Sodann wird das obere Gehäuseteil 22 über den Deckel 40 gasdicht verschlossen und die in der Anordnung vorhandene Flüssigkeit abgezogen. Dies kann durch Einführen trockenen Stickstoffs erfolgen, so dass die Flüssigkeit über eine im Bodenflansch 44 des unteren Gehäuseteils 20 vorhandene Öffnung 46 herausgedrückt wird.

Damit die Flüssigkeit ungeachtet der Tatsache, dass sich der untere Stopfen 16 im Hüllrohr 12 befindet, auch aus dem Innenrohr, also dem Hüllrohr 12, herausgedrückt werden kann, weist der untere Verschlussstopfen 16 mehrere von seiner inneren Stirnfläche 48 ausgehende Bohrungen auf, die in zumindest eine radiale Bohrung 50 übergehen, die in der der Fig. 13 zu entnehmenden Stellung des Stopfens 16 auf in der Umfangswandung des Hüllrohrs 12 vorhandene Aussparung 52 ausgerichtet ist, so dass infolgedessen die Flüssigkeit austreten kann. Auch im oberen Bereich des Hüllrohrs 12 sind entsprechende Öffnungen 54 vorhanden.

Nachdem die Flüssigkeit herausgedrückt und der Innenraum mittels Vakuumbeaufschlagung getrocknet worden ist, wird der Kolben 36 durch die im Sitz 32 der ersten Aufnahme 30 vorhandene Bohrung 34 in das Innere des Stopfens 16 verstellt, um den Stopfen 16 bis zum Anschlag 38 zu verschieben. Sodann wird der Stopfen 16 zusammen mit dem Hüllrohr 12 in Richtung des oberen Stopfens 14 in einem Umfang verstellt, dass dieser in das Hüllrohr 12 eindringt. Die diesbezüglichen Positionierungen sind den Fig. 19 und 21 zu entnehmen.

Der Kolben 36 ist über ein in dem unteren Gehäuseteil 20 verstellbares Gestänge 58 betätigbar, das innerhalb eines Zylinders 56 verstellbar ist, in dem der Kolben 36 angeordnet ist. Das Gestänge 58 ist gegenüber dem Innenraum des Zylinders 56 über einen Faltenbalg 60 abgedichtet.

In der Position, in der das Hüllrohr 12 und der obere und untere Stopfen 14, 16 ordnungsgemäß zueinander ausgerichtet sind, befinden sich in den Gehäuseteilen 20, 22, die auch als Lötstationen bezeichnet werden können, Induktionsspulen 62, 64, die einen Hohlkeramikkörper 66, 68 umgeben. Mittels der Induktionsspulen können sodann die Verschlussstopfen 14, 16 mit dem Hüllrohr 12 stoffschlüssig verbunden werden.

Um eine Überprüfung vornehmen zu können, ob die Verschlussstopfen 14, 16 ordnungsgemäß stoffschlüssig mit dem Hüllrohr 12 verbunden sind, wird die Temperatur im Bereich der Verbindung überwacht. Hierzu sind in den Hohlkeramikkörpern 66, 68 Durchbrechungen 72, 74 vorgesehen, um über eine Optik 76, 78 die Temperatur im Bereich der herzustellenden stoffschlüssigen Verbindung zu erfassen und regeln zu können. Die Temperatur wird über die Optik auf einen nicht dargestellten Lichtleiter übertragen, der zu einem außerhalb der Flüssigkeit angeordneten Messgerät wie Pyrometer führt.

Damit der obere Verschlussstopfen 14 in dem Hüllrohr 12 beim axialen Verstellen dieses in Richtung des oberen Gehäuseteils 22 nicht ausweichen kann, geht von dem Deckel 14 ein zu diesem verschwenkbares Bolzenelement 84 aus, das eine axiale Verstellung des Stopfens 14 unterbindet.

Nachdem die Verschlussstopfen 14, 16 ordnungsgemäß mit dem Hüllrohr 12 stoffschlüssig verbunden sind, also die Büchse 10 mit dem in dieser verbrachten Brennstab fertiggestellt ist, wird das obere Gehäuseteil 22 durch Verschwenken des Deckels 40 geöffnet, so dass Flüssigkeit eindringt. Die Büchse 10 wird sodann über den im Schnitt T-förmigen Ansatz 86 des oberen Verschlussstopfens 14 aus der Anordnung, also aus dem unteren Gehäuseteil 20, dem Außenrohr 18 und dem oberen Gehäuseteil 22 herausgezogen.

Die das Außenrohr 18 mit den Gehäuseteilen 20, 22 umfassende Anordnung geht von einer Tragkonstruktion 88 aus, die aus zusammensetzbaren Profilabschnitten besteht.

Durch den segmentweisen Aufbau der Tragekonstruktion 88 ergibt sich der Vorteil, dass diese im gewünschten Umfang verlängert bzw. verkürzt werden kann, und zwar in Abhängigkeit von der Tiefe, in dem die Anordnung in ein Flüssigkeitsbecken eingetaucht werden soll, in dem ein Brennstab in ein Hüllrohr 12 einzubringen ist.

## Patentansprüche

1. Verfahren zum gasdichten Umschließen zumindest eines sich in einer Flüssigkeit befindlichen Brennstabs umfassend die Verfahrensschritte:
(a) Positionieren eines stirnseitige Öffnungen aufweisenden und über erste Verschlusselemente (14, 16) verschließbaren Innenrohrs (12) in einer vertikal ausgerichteten Aufnahme,
(b) Einbringen des zumindest einen Brennstabs in das Innenrohr,
(c) Ausrichten des oberen ersten Verschlusselements auf die obere stirnseitige Öffnung des Innenrohrs,
(d) Verschließen der Aufnahme (18, 20, 22) und Entfernen der in der Aufnahme und dem Innenrohr vorhandenen Flüssigkeit,
(e) Kraftbeaufschlagung des unteren ersten Verschlusselements in axialer Richtung des Innenrohrs, wobei das Innenrohr mitgenommen wird und zu dem oberen ersten Verschlusselement bei gleichzeitigem Einbringen des oberen ersten Verschlusselements in das Innenrohr verstellt wird, und
(f) nach ordnungsgemäßem Positionieren der ersten Verschlusselemente in dem Innenrohr stoffschlüssiges Verbinden der ersten Verschlusselemente mit dem Innenrohr.

2. Verfahren nach Anspruch 1,
**dadurch gekennzeichnet,**
**dass** nach dem stoffschlüssigen Verbinden der ersten Verschlusselemente (14, 16) mit dem Innenrohr (12) die
(g) Aufnahme (18, 20, 22) geflutet wird und
(h) dass das zumindest einen Brennstab umschließende Innenrohr aus der Aufnahme entnommen wird.

3. Verfahren nach Anspruch 1 oder 2,
**dadurch gekennzeichnet,**
**dass** zumindest die Verfahrensschritte (b) bis (h) in einer oder der Flüssigkeit durchgeführt werden, in der sich der zumindest eine Brennstab befindet.

4. Verfahren nach zumindest einem der vorherigen Ansprüche,
**dadurch gekennzeichnet,**
**dass** das untere erste Verschlusselement (16) während des Entfernens der Flüssigkeit in einer ersten Position in dem Innenrohr (12) angeordnet wird, in der durch das untere erste Verschlusselement sowie zumindest eine das Innenrohr durchsetzende Öffnung (52) Flüssigkeit herausgedrückt wird.

5. Verfahren nach zumindest einem der vorherigen Ansprüche,
**dadurch gekennzeichnet,**
**dass** nach dem Entfernen der Flüssigkeit und dem Trocknen des Innenraums des Innenrohrs (12) das untere erste Verschlusselement (16) kraftbeaufschlagt wird und zur Mitnahme des Innenrohrs in diesem in eine zweite Position verstellt wird, in der das stoffschlüssige Verbinden durchgeführt wird.

6. Verfahren nach zumindest einem der vorherigen Ansprüche,
**dadurch gekennzeichnet,**
**dass** das Innenrohr (12) innerhalb der Aufnahme (18, 20, 22) mittels von deren Innenwandung ausgehenden Positionierelementen (28) geführt wird, die insbesondere in Achsrichtung der Aufnahme verlaufende, trichterförmig verlaufende Durchtrittsöffnungen aufweisen.

7. Verfahren nach zumindest einem der vorherigen Ansprüche,
**dadurch gekennzeichnet,**
**dass** das obere erste Verschlusselement (14) zum Ausrichten auf das Innenrohr (12) von einer trichterförmigen Halterung (24) aufgenommen wird und in dieser über ein die Aufnahme (18, 20, 22) verschließendes zweites Verschlusselement (40) oder ein von diesem ausgehendes Element fixiert wird, wobei insbesondere das Innenrohr durch die trichterförmige Halterung in die Aufnahme eingebracht wird und nach Verschließen des Innenrohrs durch die trichterförmige Halterung hindurch aus der Aufnahme entfernt wird.

8. Anordnung zum gasdichten Umschließen zumindest eines sich in einer Flüssigkeit befindlichen Brennstabs, umfassend
(a) ein stirnseitige Öffnungen aufweisendes Innenrohr (12), in das der zumindest eine Brennstab einbringbar ist, sowie erste Verschlusselemente (14, 16), mittels der die Öffnungen verschlossen werden,
(b) eine Aufnahme für das Innenrohr, die einen Mittelabschnitt in Form eines Außenrohrs (18) sowie das Außenrohr endseitig begrenzende Gehäuseteile (20, 22) aufweist, in denen Einrichtungen zum stoffschlüssigen Verbinden des Innenrohrs mit den ersten Verschlusselementen vorhanden sind, wobei in dem Außenrohr Führungen (28) für das Innenrohr angeordnet sind, in einem ersten Gehäuseteil (20) eine als Abstützung für das Innenrohr dienende und von einem Betätigungselement (36) durchsetzbare erste Aufnahme und in dem weiteren zweiten Gehäuseteil (22) eine zweite Aufnahme (24) vorhanden sind und die zweite Aufnahme eine trichterförmige Durchgangsöffnung aufweist, deren Längsachse bei in der zweiten Aufnahme sich befindendem Rohr auf dessen Längsachse ausgerichtet ist, wobei in der zweiten Aufnahme eines der ersten Verschlusselemente (14) über ein das zweite Gehäuseteil verschließendes zweites Verschlusselement (40) oder ein von diesem ausgehendes Fixierelement (84) fixiert wird, wobei die trichterförmige Durchgangsöffnung von dem Innenrohr durchsetzt werden kann.

9. Anordnung nach Anspruch 8,
**dadurch gekennzeichnet,**
**dass** die erste Aufnahme (30), die insbesondere einen trichterförmigen Sitz zum Abstützen des Innenrohrs (12) aufweist, über das Betätigungselement (36) in dem Innenrohr (12) bis zu einem in diesem vorhandenen Anschlag (38) axial verschiebbares erstes Verschlusselement (16) derart kraftbeaufschlagbar ist, dass nach Anliegen des ersten Verschlusselements an dem Anschlag das Verschlusselement zusammen mit dem Innenrohr zum Einbringen des von der zweiten Aufnahme (24) ausgehenden ersten Verschlusselements (14) in das Innenrohr verstellbar ist.

10. Anordnung nach Anspruch 8 oder 9,
**dadurch gekennzeichnet,**
**dass** das axial bis zum Anschlag (38) verstellbare erste Verschlusselement (16) zumindest eine von der inneren Stirnfläche (48) ausgehende und zur Umfangsfläche des ersten Verschlusselements sich erstreckende Durchgangsöffnung (50) aufweist, wobei die Durchgangsöffnung in einer ersten Position, in der das erste Verschlusselement zu dem Anschlag beabstandet ist, mit einer die Umfangswandung des Innenrohrs durchsetzenden Öffnung (52) fluchtet.

11. Anordnung nach zumindest einem der Ansprüche 8 bis 10,
**dadurch gekennzeichnet,**
**dass** die Führung (28) von der Innenfläche des Außenrohrs (18) ausgehende keil- oder trichterförmige Elemente sind, die insbesondere Aussparungen wie in Längsrichtung des Außenrohrs verlaufende Vertiefungen zum Durchlass von Flüssigkeit aufweisen.

12. Anordnung nach zumindest einem der Ansprüche 8 bis 11,
**dadurch gekennzeichnet,**
**dass** das Gehäuseteil (20, 22) eine Hohlzylindergeometrie mit zumindest einem Sichtfenster aufweist, über das beim stoffschlüssigen Verbinden eines der ersten Verschlusselemente (14, 16) und dem Innenrohr (12) Wärmestrahlung erfasst und über einen Lichtleiter zu einer außerhalb der Flüssigkeit angeordneten Temperaturmesseinrichtung leitbar ist, wobei die Temperaturmesseinrichtung vorzugsweise ein Pyrometer ist.

13. Anordnung nach zumindest einem der Ansprüche 8 bis 12,
**dadurch gekennzeichnet,**
**dass** über das die zweite Aufnahme (24) aufweisende Gehäuseteil (22) das Innenrohr (12) durch die zweite Aufnahme hindurch in das Außenrohr (18) einbringbar ist.

14. Anordnung nach zumindest einem der Ansprüche8 bis 13,
**dadurch gekennzeichnet,**
**dass** das Außenrohr (18) einen längenveränderbaren Abschnitt wie Faltenbalg (25) aufweist und insbesondere mit den Gehäuseteilen (20, 22) über Vakuumflansche verbunden ist.

## Claims

1. Method for gas-tight enclosure of at least one fuel rod placed in a liquid, comprising the method steps:
(a) positioning of an inner tube (12) having end openings and sealable by first sealing elements (14, 16) inside a vertically aligned receptacle,
(b) insertion of the at least one fuel rod into the inner tube,
(c) alignment of the upper first sealing element with the upper end opening of the inner tube,
(d) sealing of the receptacle (18, 20, 22) and removal of the liquid present in the receptacle and in the inner tube,
(e) application of force to the lower first sealing element in the axial direction of the inner tube, where said inner tube is carried along and displaced relative to the upper first sealing element while said upper first sealing element is inserted into the inner tube, and
(f) after correct positioning of the first sealing elements inside the inner tube, bonded connection of the first sealing elements to the inner tube.

2. Method according to Claim 1,
**wherein**
after bonded connection of the first sealing elements (14, 16) to the inner tube,
(g) the receptacle (18, 20, 22) is flooded and
(h) the inner tube enclosing the at least one fuel rod is removed from the receptacle.

3. Method according to Claim 1 or 2,
**wherein**
at least the method steps (b) to (h) arc performed in a liquid or in that liquid in which the at least one fuel rod is placed.

4. Method according to at least one of the preceding claims,
**wherein**
during removal of the liquid the lower first sealing element (16) is arranged in a first position inside the inner tube (12), in which position liquid is forced out through the lower first sealing element and through at least one opening (52) passing through the inner tube.

5. Method according to at least one of the preceding claims,
**wherein**
after removal of the liquid and drying of the interior of the inner tube (12), the lower first sealing element (16) is subjected to a force and, to carry along the inner tube inside said sealing element, is displaced into a second position in which the bonded connection is performed.

6. Method according to at least one of the preceding claims,
**wherein**
the inner tube (12) is guided inside the receptacle (18, 20, 22) by means of positioning elements (28) originating from its inner wall and having funnel-shaped passage openings extending in particular in the axis direction of the receptacle.

7. Method according to at least one of the preceding claims,
**wherein**
for alignment with the inner tube (12) the upper first sealing element (14) is received by a funnel-shaped holder (24) and is fixed therein by a second sealing element (40) sealing the receptacle (18, 20, 22) or by an element originating from said second sealing element, where in particular the inner tube is inserted into the receptacle through the funnel-shaped holder and after sealing of the inner tube is removed from the receptacle through the funnel-shaped holder.

8. Arrangement for gas-tight enclosure of at least one fuel rod placed in a liquid, comprising:
(a) an inner tube (12) having end openings into which the at least one fuel rod can be inserted and first sealing elements (14, 16) using which the openings are sealed,
(b) a receptacle for the inner tube having a center section in the form of an outer tube (18) and housing parts (20, 22) limiting said outer tube at the ends and in which devices for bonded connection of the inner tube to the first sealing elements are provided, where guides (28) for the inner tube are arranged inside the outer tube, a first receptacle acting as a support for the inner tube and which can be passed through by an actuating element (36) is provided in a first housing part (20) and a second receptacle (24) is provided in the further second housing part (22) and the second receptacle has a funnel-shaped passage opening whose longitudinal axis when the tube is located in the second receptacle is aligned with the longitudinal axis of said tube, where in the second receptacle one of the first sealing elements (14) is fixed by a second sealing element (40) sealing the second housing part or by a fixing element (84) originating therefrom, where the funnel-shaped passage opening can be passed through by the inner tube.

9. Arrangement according to Claim 8,
**wherein**
the first receptacle (30), which in particular has a funnel-shaped seat for supporting the inner tube (12), can be passed through by the actuating element (36) via which the first sealing element (16) axially movable inside the inner tube (12) up to a stop (38) provided inside said inner tube can be subjected to a force such that after contact of the first sealing element with the stop the sealing element together with the inner tube is adjustable for inserting the first sealing element (14) originating from the second receptacle (24) into the inner tube.

10. Arrangement according to Claim 8 or 9,
**wherein**
the first sealing element (16) axially adjustable up to the stop (38) has at least one passage opening (50) originating from the inner end face (48) and extending to the circumferential surface of the first sealing element, where the passage opening is, in a first position in which the first sealing element is at a distance from the stop, aligned with an opening (52) passing through the circumferential wall of the inner tube.

11. Arrangement according to at least one of Claims 8 to 10,
**wherein**
the guide (28) consists of wedge-shaped or funnel-shaped elements originating from the inner face of the outer tube (18) and in particular having recesses such as depressions running in the longitudinal direction of the outer tube to permit passage of the liquid.

12. Arrangement according to at least one of Claims 8 to 11,
**wherein**
the housing part (20, 22) has a hollow-cylindrical geometry with at least one vision panel via which thermal radiation is recorded during bonded connection of one of the first sealing elements (14, 16) and the inner tube (12) and can be passed via an optical fiber to a temperature measuring device arranged outside the liquid, where the temperature measuring device is preferably a pyrometer.

13. Arrangement according to at least one of Claims 8 to 12,
**wherein**
the inner tube (12) can be inserted into the outer tube (18) through the second receptacle via the housing part (22) having the second receptacle (24).

14. Arrangement according to at least one of Claims 8 to 13,
**wherein**
the outer tube (18) has a variable-length section such as a bellows-type cover (25) and is connected in particular to the housing parts (20, 22) via vacuum flanges.

## Revendications

1. Procédé pour confiner de manière étanche au gaz au moins une barre de combustible placée dans un liquide, comprenant les étapes :
(a) positionnement dans un logement vertical d'un tube intérieur (12) présentant des ouvertures frontales et pouvant être obturé par des premiers éléments d'obturation (14, 16),
(b) introduction de l'au moins une barre de combustible dans le tube intérieur,
(c) alignement du premier élément d'obturation supérieur sur l'ouverture frontale supérieur du tube intérieur,
(d) obturation du logement (18, 20, 22) et retrait du liquide présent dans le logement et le tube intérieur,
(e) application d'une force sur le premier élément d'obturation inférieur dans le sens axial du tube intérieur, sachant que le tube intérieur est entraîné et déplacé vers le premier élément d'obturation supérieur lors de l'introduction simultanée du premier élément d'obturation supérieur dans le tube intérieur, et
(f) après positionnement correct des premiers éléments d'obturation dans le tube intérieur, assemblage par liaison de matière des premiers éléments d'obturation avec le tube intérieur.

2. Procédé selon la revendication 1,
**caractérisé en ce**
**qu'**après l'assemblage par liaison de matière des premiers éléments d'obturation (14, 16) avec le tube intérieur (12)
(g) le logement (18, 20, 22) est rempli de liquide et
(h) que le tube intérieur entourant l'au moins une barre de combustible est retiré du logement.

3. Procédé selon la revendication 1 ou 2,
**caractérisé en ce**
**qu'**au moins les étapes (b) à (h) du procédé sont effectuées dans un liquide ou dans le liquide dans lequel se trouve l'au moins une barre de combustible.

4. Procédé selon au moins une des revendications précédentes,
**caractérisé en ce**
**que** pendant le retrait du liquide, le premier élément d'obturation inférieur (16) est placé dans le tube intérieur (12) dans une première position dans laquelle du liquide est expulsé par pression à travers le premier élément d'obturation inférieur et au moins une ouverture (52) traversant le tube intérieur.

5. Procédé selon au moins une des revendications précédentes,
**caractérisé en ce**
**qu'**après le retrait du liquide et le séchage de l'intérieur du tube intérieur (12), le premier élément d'obturation inférieur (16) est soumis à une force et que, pour entraîner le tube intérieur, il est déplacé dans ledit tube dans une seconde position dans laquelle est effectué l'assemblage par liaison de matière.

6. Procédé selon au moins une des revendications précédentes,
**caractérisé en ce**
**que** le tube intérieur (12) est guidé dans le logement (18, 20, 22) au moyen d'éléments de positionnement (28) partant de la paroi intérieure dudit logement et qui présentent des orifices de passage en entonnoir s'étendant en particulier dans le sens axial du logement.

7. Procédé selon au moins une des revendications précédentes,
**caractérisé en ce**
**que** pour s'aligner sur le tube intérieur (12), le premier élément d'obturation supérieur (14) est inséré dans un support (24) en entonnoir et fixé dans celui-ci par un second élément d'obturation (40) obturant le logement (18, 20, 22) ou par un élément partant du second élément d'obturation, sachant qu'en particulier le tube intérieur est introduit dans le logement à travers le support en entonnoir et, qu'après obturation du tube intérieur, est retiré du logement en passant à travers le support en entonnoir.

8. Système destiné à confiner de manière étanche au gaz au moins une barre de combustible placée dans un liquide, comprenant
(a) un tube intérieur (12) présentant des ouvertures frontales, dans lequel peut être introduite l'au moins une barre de combustible, ainsi que des premiers éléments d'obturation (14, 16) au moyen desquels sont obturées les ouvertures,
(b) un logement pour le tube intérieur, qui présente une partie médiane sous forme d'un tube extérieur (18) ainsi que des éléments de boîtier (20, 22) limitant le tube extérieur à ses extrémités et dans lesquels sont présents des dispositifs pour assembler par liaison de matière le tube intérieur avec les premiers éléments d'obturation, sachant que dans le tube extérieur sont disposés des guides (28) pour le tube intérieur, que dans un premier élément de boîtier (20) est présent un premier logement servant de support pour le tube intérieur et pouvant être traversé par un élément d'actionnement (36) et que dans l'autre second élément de boîtier (22) est présent un second logement (24) et le second logement présente un orifice de passage en entonnoir dont l'axe longitudinal est orienté sur l'axe longitudinal du tube lorsque ce dernier se trouve dans le second logement, et sachant que dans le second logement, un des premiers éléments d'obturation (14) est fixé par un second élément d'obturation (40) obturant le second élément de boîtier ou par un élément de fixation (84) partant du second élément d'obturation, l'orifice de passage en entonnoir pouvant être traversé par le tube intérieur.

9. Système selon la revendication 8,
**caractérisé en ce**
**que** le premier logement (30), qui présente en particulier un siège en entonnoir pour supporter le tube intérieur (12), peut être traversé par l'élément d'actionnement (36) dans le tube intérieur (12), au moyen duquel élément d'actionnement le premier élément d'obturation (16), déplaçable axialement jusqu'à une butée (38) présente dans le tube intérieur, peut être soumis à une force de manière telle qu'après le contact du premier élément d'obturation sur la butée, l'élément d'obturation avec le tube intérieur peuvent être déplacés afin d'introduire dans le tube intérieur le premier élément d'obturation (14) partant du second logement (24).

10. Système selon la revendication 8 ou 9,
**caractérisé en ce**
**que** le premier élément d'obturation (16) déplaçable axialement jusqu'à la butée (38) présente au moins un orifice de passage (50) partant d'une face frontale intérieure (48) et s'étendant en direction de la face circonférentielle du premier élément d'obturation, sachant que dans une première position dans laquelle le premier élément d'obturation est distant de la butée, l'orifice de passage est aligné sur une ouverture (52) traversant la paroi circonférentielle du tube intérieur.

11. Système selon au moins une des revendications 8 à 10,
**caractérisé en ce**
**que** le guide (28) est constitué d'éléments cunéiformes ou en entonnoir partant de la face intérieure du tube extérieur (18), qui présentent en particulier des évidements, tels que des encoches s'étendant dans le sens longitudinal du tube extérieur, afin de permettre le passage d'un liquide.

12. Système selon au moins une des revendications 8 à 11,
**caractérisé en ce**
**que** l'élément de boîtier (20, 22) présente une géométrie de cylindre creux avec au moins un regard par lequel, lors de l'assemblage par liaison de matière d'un des premiers éléments d'obturation (14, 16) et du tube intérieur (12), un rayonnement thermique est capté et peut être acheminé via une fibre optique à un dispositif de mesure de température placé hors du liquide, le dispositif de mesure de température étant de préférence un pyromètre.

13. Système selon au moins une des revendications 8 à 12,
**caractérisé en ce**
**que** le tube intérieur (12) peut être introduit dans le tube extérieur (18) par l'élément de boîtier (22) présentant le second logement (24) en traversant le second logement.

14. Système selon au moins une des revendications 8 à 13,
**caractérisé en ce**
**que** le tube extérieur (18) présente une partie de longueur modifiable, telle qu'un soufflet (25), et est en particulier relié aux éléments de boîtier (20, 22) par des brides à vide.
